# EUROPÄISCHE PATENTANMELDUNG

(11) **EP 0 564 713 A2**
(43) Veröffentlichungstag der Anmeldung: **13.10.1993**
(21) Anmeldenummer: 92121967.1
(22) Anmeldetag: 24.12.1992
(51) Int. Cl.: B01J 2/00, C22B 1/248

(54) **Verfahren zur Verfestigung von lockeren metallhaltigen Substanzen, Verfestigungsvorrichtung sowie Verfestigungsprodukt**

(30) Priorität: 24.12.1991 DE 4142999
(71) Anmelder: Oesterreich, Franz, D-21395 Bütlingen (DE)
(72) Erfinder: Oesterreich, Franz, 2121 Bütlingen (DE); Fritsch, Andre, 2095 Marschacht (DE)
(74) Vertreter: Heldt, Gert, Dr. Dipl.-Ing.

(57) **Zusammenfassung**

Das Verfahren zur Verfestigung einer metallhaltigen lockeren Substanz sieht vor, daß die Substanz mit einem Bindemittel zu einem Zwischenprodukt vermischt und anschließend eine Formung zu einem Endprodukt durchgeführt wird. Das Bindemittel wird bei der Formung zum Endprodukt kristallisiert. Es werden Teilchen der Substanz miteinander verklebt. Das Zwischenprodukt wird mit einer flüssigen Komponente versetzt. Vor der Durchführung des Mischvorganges wird eine mechanische Aufbereitung der Substanz durchgeführt. Die Vorrichtung zur Durchführung des obigen Verfahrens beinhaltet eine Mischeinrichtung. Die Mischeinrichtung zur Vermengung der Substanz mit einem Bindemittel ist über eine Transporteinrichtung mit einer ein durch den Mischvorgang bereitgestelltes Mischprodukt zu einem Endprodukt formenden Formstation verbunden. Zur Befeuchtung des Zwischenproduktes mit einer Flüssigkeit ist eine Sprühvorrichtung vorgesehen. Sie ist im Bereich der Mischeinrichtung angeordnet. Eine der Mischeinrichtung vorgeschaltete mechanische Aufbereitungseinrichtung ist für die Substanz vorgesehen. Im Bereich der Mischeinrichtung ist eine ein Entspannungsmittel abgebende Vorrichtung angeordnet. Zur Formung des Zwischenproduktes ist eine Trenneinrichtung vorgesehen, die eine barrenförmige Unterteilung des Zwischenproduktes vornimmt.

## Beschreibung

Die Erfindung betrifft ein Verfahren zur Verfestigung einer metallhaltigen lockeren Substanz.

Die Erfindung betrifft darüber hinaus eine Vorrichtung zur Verfestigung einer metallhaltigen Substanz.

Die Erfindung betrifft schließlich ein Verfestigungsprodukt, das eine Vielzahl von Teilchen einer metallischen Substanz enthält.

Bei einem bekannten derartigen Verfahren werden Filterstäube, die bei der Edelstahlverarbeitung anfallen, einer Formvorrichtung zugeführt und mechanisch verpreßt. Durch diese Verpressung wird der Filterstaub verdichtet und die den Filterstaub ausbildenden Teilchen miteinander verbunden. Die bei dieser Verpressung entstehenden Blöcke können anschließend einer Schmelzeinrichtung zugeführt und erneut für die Stahlerzeugung verwendet werden.

Eine derartige Verfestigung kann jedoch nicht in wirtschaftlicher Weise durchgefuhrt werden, wenn statt der Filterstäube feuchte Schleifspäne aufbereitet werden sollen. Bei derartigen Schleifstäuben oder Schleifspänen sind Schleifmittelrückstände enthalten, die bei mechanischen Verpressungen zu erheblichem Verschleiß bei den verwendeten Werkzeugen führen. Das bekannte Verfahren und die zur Realisierung des Verfahrens verwendeten Vorrichtungen ermöglichen jedoch auch bei der Aufbereitung von Filterstäuben nicht den für eine flexible Produktion erforderlichen Freiraum.

Aufgabe der vorliegenden Erfindung ist es daher, ein Verfahren der einleitend genannten Art derart zu verbessern, daß es universell einsetzbar ist.

Diese Aufgabe wird erfindungsgemäß dadurch gelöst, daß die Substanz mit einem Bindemittel versetzt sowie zu einem Zwischenprosen versehene Strukturen der Substanz aufbricht. Derartige Strukturen können beispielsweise bei eisenhaltigen Stoffen dadurch entstehen, daß eine teilweise Oxidierung stattfindet, die die Teilchen in ihrer jeweiligen Orientierung zueinander fixiert. Eine derartige Fixierung ist jedoch für den vorgesehenen Mischvorgang nachteilig. Bei der Durchführung des Mischvorganges mit dem Bindemittel kann zur Erleichterung des Mischvorganges eine Entspannungssubstanz zugegeben werden, die eine innige Verbindung dieser Substanz und des Bindemittels erleichtert. Außerdem kann die Zugabe eines Reduktionsmittels erfolgen, welches der Substanz eine gleichmäßige Konsistenz über einen längeren Zeitraum beispielsweise bis zur Weiterverarbeitung verleiht und dadurch für diesen Zeitraum eine chemische Reaktion der Substanz unterbunden wird.

Gemäß einer bevorzugten Ausführungsform der Erfindung ist vorgesehen, daß als Bindemittel eine kristallisierbare Substanz verwendet wird. Derartige kistallisierbare Bindemittel ermöglichen es, als eine zusätzliche flüssige Komponente Wasser zu verwenden, das vom Bindemittel in Form von Kristallwasser aufgenommen wird. Als kristallisierbare Substanzen können beispielsweise Zement, Gips oder Kalk verwendet werden. Diese Substanzen haben darüber hinaus den Vorteil, nach einem Aufschmelzen der Endprodukte umweltfreundlich und mit vergleichsweise geringem Aufwand wieder abgeschieden werden zu können. Grundsätzlich sind jedoch auch beliebige andere Bindemittel verwendbar.

Gemäß einer anderen bevorzugten Ausführungsform der Erfindung ist vorgesehen, daß das Zwischenprodukt im Bereich einer Agglomeriereinrichtung zu einen Granulat verarbeitet wird. Die Verwendung einer derartigen Agglomeriereinrichtung weist den Vorteil auf, daß durch Einstellung der technischen Randbedingungen die Größe des Agglomerats in einfacher Weise verändert werden kann. Hierdurch kann ein vergleichsweise großes Anwendungsspektrum für die Endprodukte bereitgestellt werden. Darüber hinaus sind Agglomeriereinrichtungen dafür geeignet, bei vergleichsweise kompaktem Aufbau eine hohe Durchsatzrate zu gewährleisten.

Gemäß einer weiteren bevorzugten Ausführungsform ist vorgesehen, das Zwischenprodukt in Formen zu gießen und dabei dem Endprodukt ein barrenförmiges Aussehen zu verleihen. Durch einen derartigen Gießvorgang kann ein sehr hohes spezifisches Gewicht des Endproduktes erzielt werden und die barrenförmigen Endprodukte können darüber hinaus sehr kompakt und somit mit einem geringen Transportvolumen verstaut werden.

Weitere Einzelheiten der vorliegenden Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

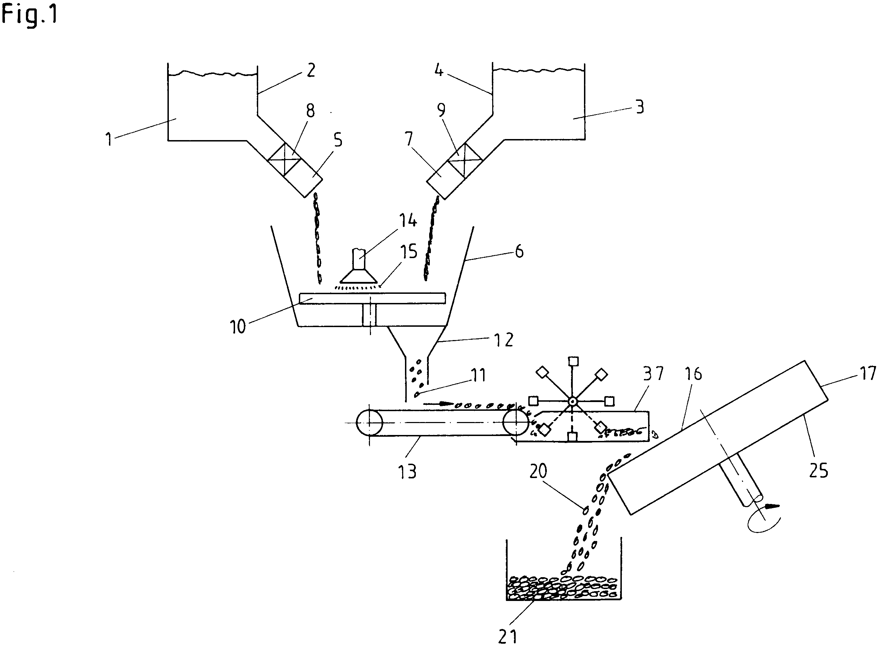

- Fig. 1:: ein Prinzipschaubild einer Vorrichtung mit einer Agglomeriereinrichtung

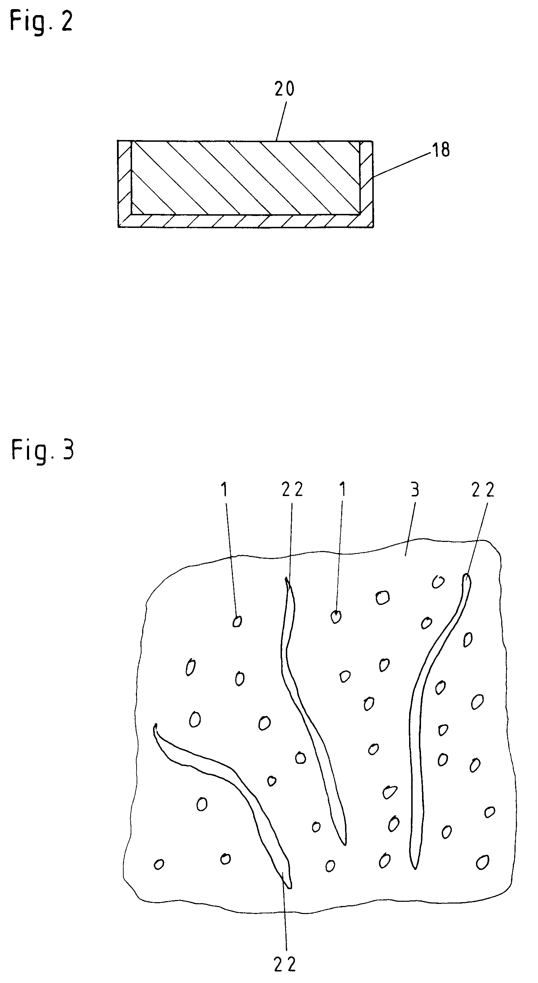

- Fig. 2:: einen Längsschnitt durch eine Form zur Ausbildung eines barrenförmigen Endproduktes,
- Fig. 3:: einen Querschnitt durch ein Endprodukt, dem Substanzspäne zugesetzt sind,

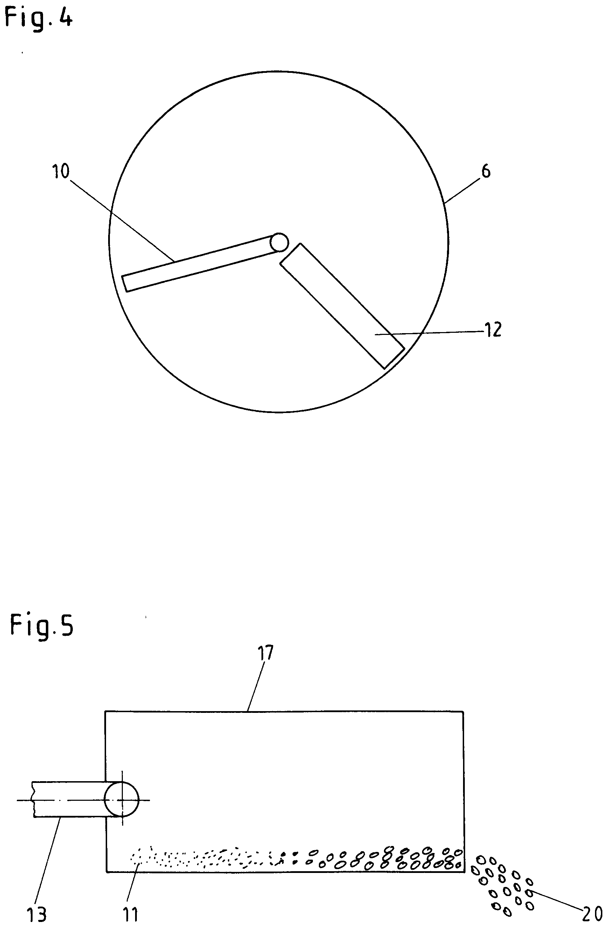

- Fig. 4:: eine Draufsicht auf eine Mischeinrichtung mit einem Mischarm
- Fig. 5:: eine Prinzipdarstellung einer Agglomeriertrommel.

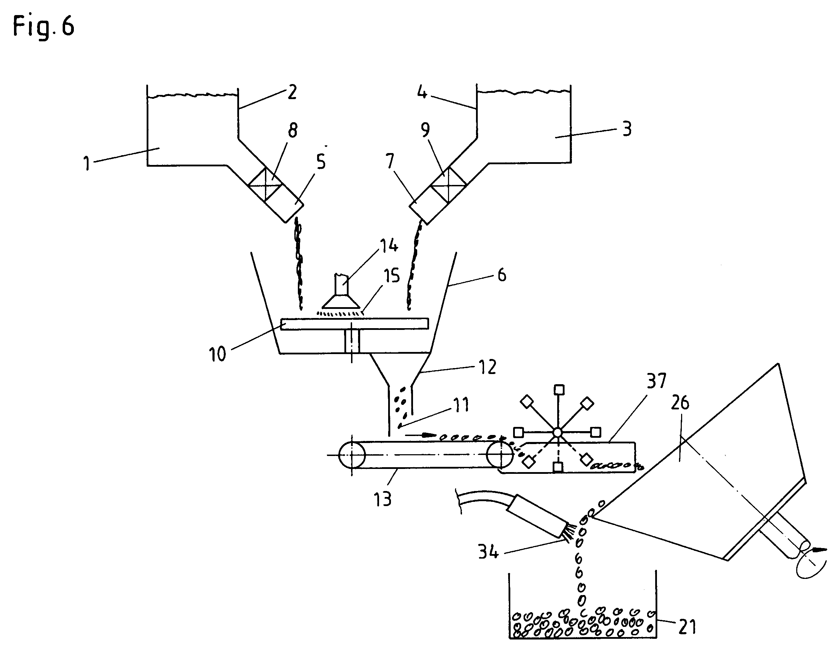

- Fig. 6:: ein Prinzipschaubild einer Vorrichtung mit einem Konus als Agglomeriereinrichtung,

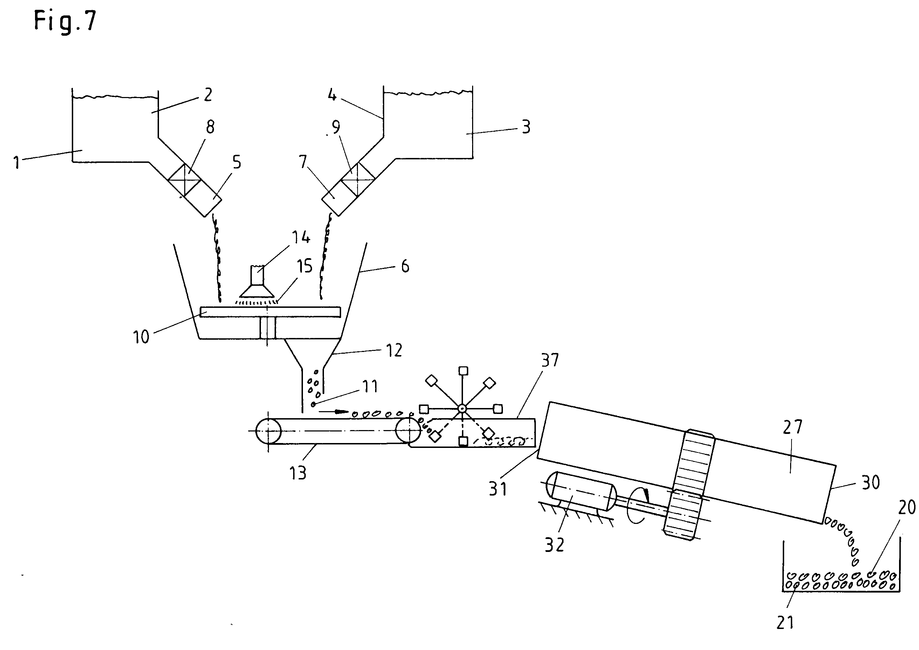

- Fig. 7:: ein Prinzipschaubild einer Vorrichtung mit einer geneigten Trommel als Agglomeriereinrichtung,

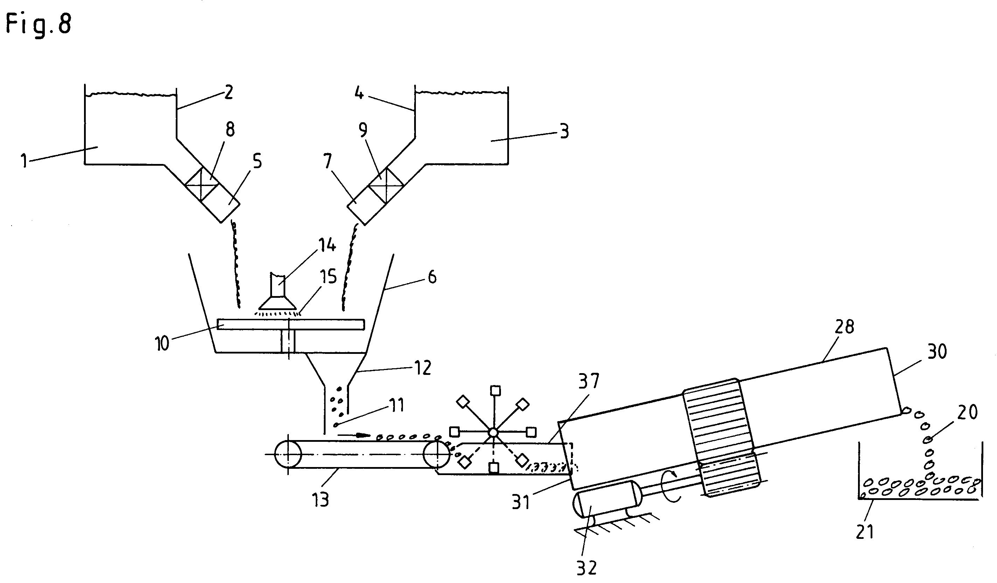

- Fig. 8:: ein Prinzipschaubild einer Vorrichtung mit angestellter Trommel als Agglomeriereinrichtung,

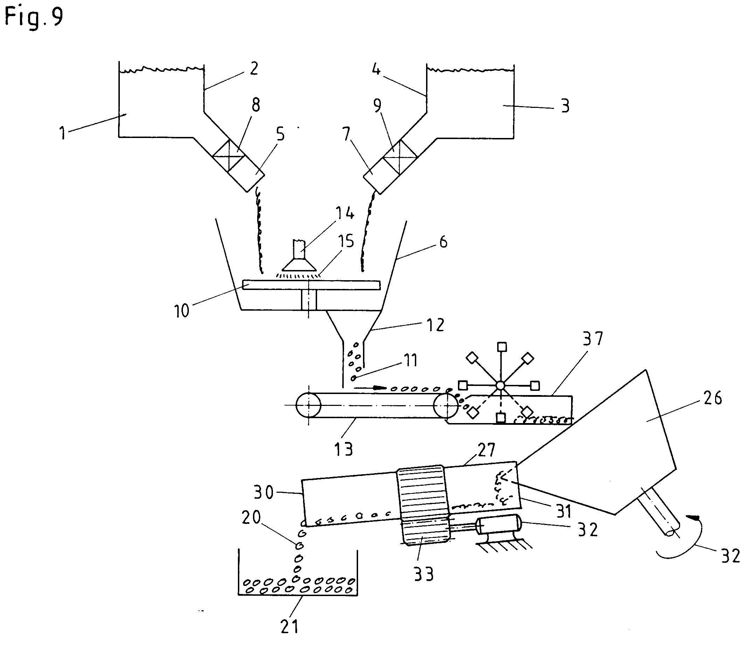

- Fig. 9:: ein Prinzipschaubild einer Vorrichtung mit einer Kombination aus Konus und geneigter Trommel als Agglomeriereinrichtung **und**

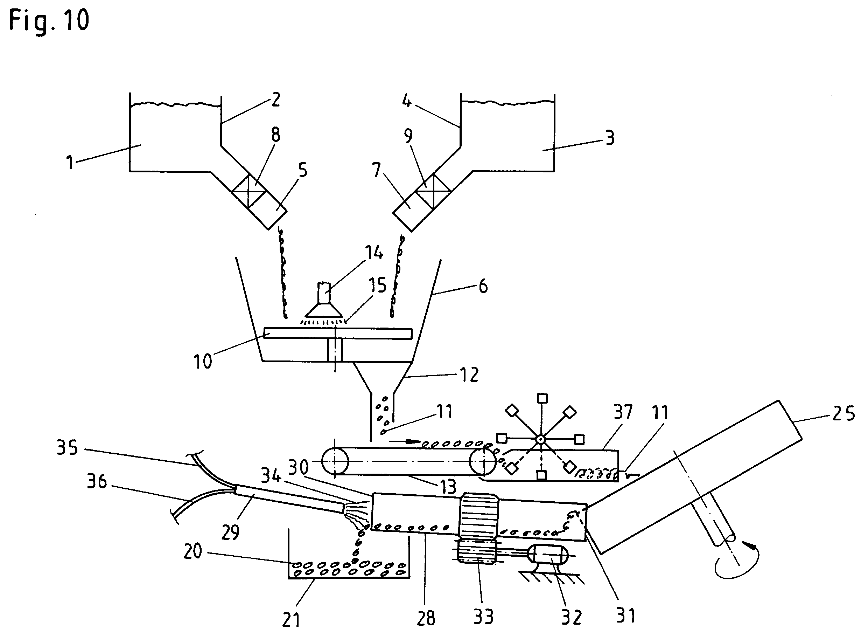

- Fig. 10:: ein Prinzipschaubild einer Vorrichtung mit einem Teller und einer angestellten Trommel als Agglomeriereinrichtung
Eine Vorrichtung zur Verfestigung einer metallhaltigen Substanz (1) besteht im wesentlichen aus einem die Substanz bevorratenden Substanzbehälter (2) sowie einem ein Bindemittel (3) bevorratenden Bindemittelbehälter (4). Über eine Zuführung (5) wird die Substanz (1) in den Bereich einer Mischeinrichtung (6) geleitet. Das Bindemittel (3) wird über eine Zuführung (7) in den Bereich der Mischeinrichtung (6) geleitet. Die Menge des in den Bereich der Mischeinrichtung (6) gelangenden Bindemittels (3) sowie die Menge an Substanz (1) wird über Sperreinrichtungen (8,9) eingestellt. Die Mischeinrichtung (6) ist mit einem Mischwerk (10) versehen. Ein im Bereich der Mischeinrichtung (6) fertiggestelltes Zwischenprodukt (11) wird über eine Entnahmeeinrichtung (12) in den Bereich einer Transporteinrichtung (13) geleitet. Über eine Sprühvorrichtung (14) kann eine Anfeuchtung des Zwischenproduktes (11) mit einer Flüssigkeit (15) erfolgen. Insbesondere ist daran gedacht, die Sprühvorrichtung (14) im Bereich der Mischeinrichtung (6) anzuordnen. Grundsätzlich ist es jedoch auch denkbar, die Flüssigkeit (15) in jedem anderen Bereich der Vorrichtung zuzuführen. Bei einer Verwendung eines flüssigen Bindemittels (3), beispielsweise eines Kunstharzes, ist die Zuführung einer separaten Flüssigkeit (15) entbehrlich.

Die Transporteinrichtung (13) führt das Zwischenprodukt (11) einer Formstation (16) zu. Die Formstation (16) kann beispielsweise aus einer Agglomeriereinrichtung (17) oder einer Gußform (18) ausgebildet sein. Grundsätzlich ist es jedoch auch denkbar, ein Zwischenprodukt (11) vergleichsweise fester Konsistenz über eine Teilungseinrichtung zu portionieren.

Bei der Verwendung einer Agglomeriereinrichtung (17), die beispielsweise als ein Agglomerierteller (25), ein Agglomerierkonus (26) oder eine Agglomeriertrommel (27,28) ausgebildet sein kann, wird das Zwischenprodukt (11) zu einem granulatartigen Endprodukt (20) geformt. Durch eine Rotation der Agglomeriereinrichtung (17) werden die Substanz (1) ausbildende Teilchen und Bindemittel (3) miteinander verbunden und zu Kugeln oder anderen gerundeten Körpern geformt. Die Größe der dabei erzeugten Kugeln kann insbesondere durch die Menge und den Zustand der Agglomeriermasse beeinflußt werden. Darüberhinaus kann die Festigkeit der agglomerierten Masse, beispielsweise der Kugeln dadurch beeinflußt werden, daß die Masse mehr oder minder lange in der Formstation (16) zubewegt wird. Zu diesem Zwecke kann die Agglomeriertrommel (27) entweder in Richtung auf ihren Ausgang (30) nach unten geneigt oder nach oben angestellt sein, und zwar bezüglich einem Einlaß (31), durch den das Zwischenprodukt (11) in die Agglomeriertrommel (27, 28) eingeleitet wird.

Diese Einleitung des Zwischenproduktes (11) kann unmittelbar von der Transporteinrichtung (13) aus erfolgen. Es ist jedoch auch möglich, das Zwischenprodukt (11) je nach dessen Konsistenz vorzuformen. Zu diesem Zwecke kann zwischen die Agglomeriertrommel (27, 28) und die Transporteinrichtung (13) entweder ein Agglomerierteller (25) oder ein Agglomerierkonus (26) geschaltet sein. Auch die Auswahl zwischen diesen beiden Agglomeriereinrichtungen (25, 26) erfolgt entsprechend dem jeweils gewünschten Ablauf des Agglomeriervorganges, insbesondere in Abhängigkeit von der Konsistenz des Zwischenproduktes (11). Darüberhinaus kann auch noch eine Auswahl innerhalb der möglichen Drehzahlen getroffen werden. Beispielsweise kann auf diese Weise das Verweilen des Zwischenproduktes (11) innerhalb der Agglomeriereinrichtungen (25, 26, 27, 28) gesteuert werden. Weiterhin ist es möglich dadurch auf die Verweildauer des Produktes innerhalb der Vorrichtung Einfluß zu nehmen, daß die Agglomeriereinrichtungen (25, 26, 27, 28) mehr oder minder stark gegenüber der Horizontalen geneigt oder angestellt wird. Über einem großen Anstellwinkel der Agglomeriertrommel (28) bilden sich in dieser auch bei vergleichsweise hohen Drehzahlen der Agglomeriertrommel (28) vergleichsweise große kugelförmige Agglomerate, bevor diese aus dem Ausgang (30) in den Sammelbehälter (21) hineinfallen. Durch die Verwendung einer Vorformung mit Hilfe eines Agglomeriertellers (25) bzw. eines Agglomerierkonus (26) wird erreicht, daß die austretenden Agglomerate eine sehr feste Konsistenz besitzen.

## Patentansprüche

1. Verfahren zur Verfestigung einer metallhaltigen lockeren Substanz, dadurch gekennzeichnet, daß die Substanz (1) mit einem Bindemittel (3) zu einem Zwischenprodukt (11) vermischt wird und anschließend eine Formung zu einem Endprodukt (20) durchgeführt wird.

2. Verfahren nach Anspruch 1, dadurch gekennzeichnet, daß das Bindemittel (3) bei der Formung zu dem Endprodukt (20) kristallisiert wird.

3. Verfahren nach Anspruch 1, dadurch gekennzeichnet, daß durch das Bindemittel (3) Teilchen der Substanz (1) miteinander verklebt werden.

4. Verfahren nach Anspruch 1 bis 3, dadurch gekennzeichnet, daß das Zwischenprodukt (11) mit einer flüssigen Komponente versetzt wird.

5. Verfahren nach Anspruch 1 bis 4, dadurch gekennzeichnet daß vor der Durchführung des Mischvorganges eine mechanische Aufbereitung der Substanz (1) durchgeführt wird.

6. Verfahren nach Anspruch 5, dadurch gekennzeichnet, daß die Substanz (1) geshreddert wird.

7. Verfahren nach Anspruch 5, dadurch gekennzeichnet, daß die Substanz (1) gemahlen wird.

8. Verfahren nach Anspruch 5, dadurch gekennzeichnet, daß die Substanz (1) gehäckselt wird.

9. Verfahren nach Anspruch 1 bis 8, dadurch gekennzeichnet, daß die Substanz (1) mit einem Entspannungsmittel versetzt wird.

10. Verfahren nach Anspruch 9, dadurch gekennzeichnet, daß etwa 0,3 bis 0,8 Volumenprozente Entspannungsmittel zugesetzt werden.

11. Verfahren nach Anspruch 1 bis 10, dadurch gekennzeichnet, daß dem Zwischenprodukt (11) ein Reduktionsmittel zugegeben wird.

12. Verfahren nach Anspruch 1 bis 11, dadurch gekennzeichnet, daß die Substanz (1) mit einem mit Wasser vermengten Alkalisilikat versetzt wird.

13. Verfahren nach Anspruch 12, dadurch gekennzeichnet, daß eine durch die Kombination von Wasser und Alkalisilikat entstehende Wasserglaslösung mit etwa 0,5 bis 1,5 Volumenenprozenten zur Substanz (1) zugeführt wird.

14. Verfahren nach Anspruch 1 bis 13, dadurch gekennzeichnet, daß das Endprodukt (20) zur Vergrößerung seiner Festigkeit erhitzt und/oder getrocknet wird.

15. Verfahren nach Anspruch 14, dadurch gekennzeichnet, daß ein Luftstrom auf das Endprodukt (20) entgegen seiner Förderrichtung gerichtet wird.

16. Verfahren nach Anspruch 15, dadurch gekennzeichnet, daß der Lufstrom heiß ist.

17. Verfahren nach Anspruch 15, dadurch gekennzeichnet, daß der Luftstrom kalt ist.

18. Verfahren nach Anspruch 15 und 16, dadurch gekennzeichnet, daß der Heißluftstrom von einer entgegen der Förderrichtung des Endprodukts gerichteten Flamme erzeugt wird.

19. Verfahren nach Anspruch 1 bis 18, dadurch gekennzeichnet, daß das mit einer Flüssigkeit (15) versetzte Zwischenprodukt (12) über eine Teilungseinrichtung zum Endprodukt (20) geformt wird.

20. Verfahren nach Anspruch 19, dadurch gekennzeichnet, daß durch die Teilungseinrichtung erzeugte ziegelförmige Barren einer Lufttrocknung ausgesetzt werden.

21. Verfahren nach Anspruch 1 bis 18, dadurch gekennzeichnet, daß das Zwischenprodukt (11) zu dem Endprodukt (20) agglomeriert wird.

22. Verfahren nach Anspruch 19 und 20, dadurch gekennzeichnet, daß das Zwischenprodukt (11) durch einen Gießvorgang in das Endprodukt (20) verformt wird.

23. Verfahren nach Anspruch 19 bis 22, dadurch gekennzeichnet, daß eine das Zwischenprodukt (11) zur Formung des Endproduktes (20) aufnehmende Gußform (18) vor einer Zuführung des Zwischenproduktes (11) zur Haftungsverminderung bestäubt oder besprüht wird.

24. Verfahren nach Anspruch 1 bis 20, dadurch gekennzeichnet, daß das Zwischenprodukt (11) zum Endprodukt (20) verpreßt wird.

25. Verfahren nach Anspruch 24, dadurch gekennzeichnet, daß während des Preßvorganges verflüchtigbare Anteile durch Unterdruck entzogen werden.

26. Verfahren nach Anspruch 1 bis 25, dadurch gekennzeichnet, daß das Zwischenprodukt (11) mit Metall- und Eisenstäuben versetzt wird.

27. Verfahren nach Anspruch 1 bis 26, dadurch gekennzeichnet, daß das Zwischenprodukt (11) mit Stahlspänen versetzt wird.

28. Verfahren nach Anspruch 1 bis 27, dadurch gekennzeichnet daß das Zwischenprodukt (11) mit Gußspänen versetzt wird.

29. Verfahren nach Anspruch 1 bis 25, dadurch gekennzeichnet, daß das Zwischenprodukt (11) mit einem Gemisch aus Gußspänen und - stäuben versetzt wird.

30. Verfahren nach Anspruch 1 bis 29, dadurch gekennzeichnet, daß das zwischenprodukt (11) mit Wasser versetzt wird.

31. Verfahren nach Anspruch 1 bis 30, dadurch gekennzeichnet, daß die Substanz (1) im Bereich einer Mischeinrichtung (6) mit Zement vermengt wird.

32. Verfahren nach Anspruch 1 bis 31, dadurch gekennzeichnet, daß die Substanz (1) während des Einmischens des Bindemittels (3) mindestens bereichsweise oxidiert wird.

33. Verfahren nach Anspruch 1 bis 32, dadurch gekennzeichnet, daß der Substanz (1) im Bereich der Mischeinrichtung (6) etwa 10 Gewichtsprozente Bindemittel (3) zugeführt werden.

34. Verfahren nach Anspruch 1 bis 33, dadurch gekennzeichnet, daß als Substanz (1) ein Eisenteilchen enthaltendes Material verwendet wird.

35. Verfahren nach Anspruch 1 bis 34, dadurch gekennzeichnet daß als Substanz (1) ein Schleifmittelrückstände enthaltender Schleifstaub verwendet wird.

36. Verfahren nach Anspruch 1 bis 35, dadurch gekennzeichnet, daß die Substanz (1) vor der Durchführung des Mischvorganges oxidiert wird.

37. Vorrichtung zur Verfestigung einer metallhaltigen Substanz, dadurch gekennzeichnet, daß eine Mischeinrichtung (6) zur Vermengung der Substanz (1) mit einem Bindemittel (3) über eine Transporteinrichtung (13) mit einer ein durch den Mischvorgang bereit-gestelltes Zwischenprodukt (11) zu einem Endprodukt (20) formenden Formstation (16) verbunden ist.

38. Vorrichtung nach Anspruch 37, dadurch gekennzeichnet, daß zur Befeuchtung des Zwischenproduktes (11) mit einer Flüssigkeit (15) eine Sprühvorrichtung (14) vorgesehen ist.

39. Vorrichtung nach Anspruch 37 oder 38, dadurch gekennzeichnet, daß die Sprühvorrichtung (14) im Bereich der Mischeinrichtung (6) angeordnet ist.

40. Vorrichtung nach Anspruch 37 bis 39, dadurch gekennzeichnet, daß die Spruhvorrichtung (14) im Bereich der Agglomeriereinrichtung (17) angeordnet ist.

41. Vorrichtung nach Anspruch 37 bis 40, dadurch gekennzeichnet, daß eine der Mischeinrichtung (6) vorgeschaltete mechanische Aufbereitungseinrichtung für die Substanz (1) vorgesehen ist.

42. Vorrichtung nach Anspruch 41, dadurch gekennzeichnet, daß die Aufbereitungseinrichtung als ein Shredder ausgebildete ist.

43. Vorrichtung nach Anspruch 37 bis 41, dadurch gekennzeichnet, daß die Aufbereitungseinrichtung als eine Mühle ausgebildet ist.

44. Vorrichtung nach Anspruch 37 bis 43, dadurch gekennzeichnet, daß die Bereich der Mischeinrichtung (6) eine Entspannungsmittelzuführung angeordnet ist.

45. Vorrichtung nach Anspruch 37 bis 44, dadurch gekennzeichnet, daß die Formung den Zwischenproduktes (11) in das Endprodukt (20) eine eine barrenförmige Unterteilung vornehmende Trenneinrichtung vorgesehen ist.

46. Vorrichtung nach Anspruch 37 bis 44, dadurch gekennzeichnet, daß zur Umwandlung des Zwischenproduktes (11) in das Endprodukt (20) eine Agglomeriereinrichtung (17) vorgesehen ist.

47. Vorrichtung nach Anspruch 46, dadurch gekennzeichnet, daß die Agglomeriereinrichtung (17) als ein Agglomerierteller ausgebildet ist.

48. Vorrichtung nach Anspruch 47, dadurch gekennzeichnet, daß die Agglomeriereinrichtung (17) als ein Agglomerierkonus ausgebildet ist.

49. Vorrichtung nach Anspruch 48, dadurch gekennzeichnet, daß die Agglomeriereinrichtung (17) als ein Agglomeriertrommel ausgebildet ist.

50. Vorrichtung nach Anspruch 47 und 49, dadurch gekennzeichnet, daß zur vorformung des Zwischenproduktes (11) ein Agglomerierteller und zur Endformung und Verfestigung des Zwischenproduktes (11) eine Agglomeriertrommel dem Agglomerierteller nachgeschaltet ist.

51. Vorrichtung nach Anspruch 48 und 49, dadurch gekennzeichnet, daß zur Vorformung des Zwischenproduktes (11) ein Agglomerierkonus und zur Endformung und Verfestigung des Zwischenproduktes (11) eine Agglomeriertrommel dem Agglomerierkonus nachgeschaltet ist.

52. Vorrichtung nach Anspruch 49 bis 51, dadurch gekennzeichnet, daß auf einen das Endprodukt (20) abgebenden Auslaß der Agglomeriertrommel eine Ausströmöffnung eines Trockners gerichtet ist.

53. Vorrichtung nach Anspruch 52, dadurch gekennzeichnet, daß der Trockner als ein Heißlufterzeuger ausgebildet ist, dessen Ausströmöffnung auf den Auslaß der Agglomeriertrommel gerichtet ist und dessen Heißluftstrom in die Agglomeriertrommel hinein entgegen der Förderrichtung des Endproduktes (20) gerichtet ist.

54. Vorrichtung nach Anspruch 52 und 53, dadurch gekennzeichnet, daß der Trockner als ein Flammentrockner ausgebildet ist, dessen Trocknerflamme auf das aus dem Auslaß der Agglomeriertrommel austretende Endprodukt (20) gerichtet ist.

55. Vorrichtung nach Anspruch 49 bis 54, dadurch gekennzeichnet, daß der Auslaß der Agglomeriertrommel in lotrechter Richtung höher als ein das Zwischenprodukt (11) in die Agglomeriertrommel einleitender Einlaß angeordnet ist, so daß die Agglomeriertrommel in Förderrichtung des Zwischenproduktes entsprechend einem vorgebenen Anstellwinkel angestellt ist.

56. Vorrichtung nach Anspruch 37 bis 45, dadurch gekennzeichnet, daß zur Umformung des Zwischenproduktes (11) in ein barrenförmiges Endprodukt (20) zu einem mit einer Gußform (18) ausgestattete Gußeinrichtung vorgesehen ist.

57. Vorrichtung nach Anspruch 37 bis 45, dadurch gekennzeichnet, daß zur Umformung des Zwischenproduktes (11) in ein barrenförmiges Endprodukt (20) eine Preßeinrichtung vorgesehen ist.

58. Verfestigungsprodukt, das eine Vielzahl von Teilchen einer metallischen Substanz enthält, dadurch gekennzeichnet, daß die Teilchen mit einem Bindmittel (3) vermengt sind und die Teilchen gemeinsam mit den Bindemittel (3) einen räumlichen Verband ausbilden, der eine wesentlich größere räumliche Ausdehnung als die einzelnen Teilchen aufweist.

59. Verfestigungsprodukt nach Anspruch 58, dadurch gekennzeichnet, daß das Bindemittel (3) kristallisiert ist.

60. Verfestigungsprodukt nach Anspruch 59, dadurch gekennzeichnet, daß das Bindemittel (3) als Zement ausgebildet ist.

61. Verfestigungsprodukt nach Anspruch 59 und 60, dadurch gekennzeichnet, daß das Bindemittel (3) als Gips ausgebildet ist.

62. Verfestigungsprodukt nach Anspruch 59 bis 61, dadurch gekennzeichnet, daß das Bindemittel (3) als Kalk ausgebildet ist.

63. Verfestigungsprodukt nach Anspruch 59, dadurch gekennzeichnet, daß das Bindemittel (3) aus einem Alkalisilikat besteht.

64. Verfestigungsprodukt nach Anspruch 59, dadurch gekennzeichnet, daß das Bindemittel (3) aus einem Natronsilikat besteht.

65. Verfestigungsprodukt nach Anspruch 58 bis 64, dadurch gekennzeichnet, daß als Oxidationsmittel Kaliumpermanganat zugesetzt ist.

66. Verfestigungsprodukt nach Anspruch 58 bis 65, dadurch gekennzeichnet, daß das Bindemittel (3) klebende Eigenschaften aufweist.

67. Verfestigungsprodukt nach Anspruch 66, dadurch gekennzeichnet, daß das Bindemittel (3) Kunststoffanteile aufweist.

68. Verfestigungsprodukt nach Anspruch 66 und 67, dadurch gekennzeichnet, daß das Bindemittel (3) Harzanteile aufweist.

69. Verfestigungsprodukt nach Anspruch 58 bis 68, dadurch gekennzeichnet, daß den Teilchen und dem Bindemittel (3) Substanzspäne (22) beigemengt sind.

70. Verfestigungsprodukt nach Anspruch 58 bis 69, dadurch gekennzeichnet, daß die metallische Substanz (1) bereichsweise aus Eisen ausgebildet ist.

71. Verfestigungsprodukt nach Anspruch 583 bis 70, dadurch gekennzeichnet, daß die Eisenteilchen Schleifmittelrückstände enthalten.
